# DEMANDE DE BREVET EUROPEEN

(11) **EP 1 351 442 A1**
(43) Date de publication de la demande: **08.10.2003**
(21) Numéro de dépôt: 03290639.8
(22) Date de dépôt: 14.03.2003
(51) Int. Cl.: H04L 12/24, H04L 12/56

(54) **Système de gestion de service pour la mise en place de service et le contrôle de la qualité de service**

(30) Priorité: 05.04.2002 FR 0204273
(71) Demandeur: ALCATEL, 75008 Paris (FR)
(72) Inventeur: Delegue, Gérard, 94230 Cachan (FR); Papini, Hélène, 91400 Orsay (FR); Piekarec, Sophie, 91940 Les Ulis (FR)
(74) Mandataire: Chaffraix, Sylvain

(57) **Abrégé**

La présente invention a pour objet un système (12) de gestion de service sur un réseau, ce système comprenant une couche (13) de haut niveau d'abstraction indépendante du réseau, une couche (15) de bas niveau d'abstraction dépendante de la technologie du réseau et une couche (14) de niveau d'abstraction intermédiaire dépendante de la technologie du réseau. La couche (14) de niveau intermédiaire comprend des moyens (6) pour déterminer les ressources physiques du réseau nécessaires à la mise en place d'un service, des moyens (8) pour déterminer le type de mesures pertinentes pour contrôler la qualité de service requise, des moyens (7) pour traduire les requêtes logiques de mise en place de service provenant de la couche (13) de haut niveau en requêtes physiques destinées à la couche (15) de bas niveau et des moyens (9) pour traduire les informations liées aux données collectées en informations compréhensibles par la couche (15) de haut niveau.

## Description

La présente invention concerne un système de gestion de service sur au moins un réseau, plus particulièrement adapté à la mise en place de service et au contrôle de la qualité de service.

Le développement des applications sur les réseaux entraîne une adaptation nécessaire des ressources telles que la bande passante ou le délai de transmission de ces réseaux en fonction du type d'application utilisée. Ainsi, les flux de données liés à une application de téléphonie sont plus sensibles à des contraintes de délai que ne le sont des flux de données de messagerie électronique. Il s'avère donc de plus en plus important de différencier les applications entre elles de façon à les traiter de manière spécifique. Cette différenciation se fait en introduisant une notion de qualité de service, dénommée QdS. La QdS est la capacité d'un élément de réseau tel qu'un routeur à assurer la satisfaction des besoins de service et de trafic. Cette QdS offre donc une garantie à un client sur la qualité du service qu'il achète à un fournisseur : les contraintes de performances des éléments de réseaux propres à assurer une certaine QdS sont répertoriées dans un document contractuel conclu entre le client et le fournisseur de service. On associe à chaque contrat un ensemble de paramètres techniques de réseau, dénommé SLS (Service Level Specification), lesdits paramètres permettant de définir la manière dont un service doit être traité sur un réseau pour respecter une certaine QdS.

De plus, les infrastructures de réseau sont de plus en plus complexes et hétérogènes puisqu'elles utilisent généralement plusieurs technologies telles que les modes de transmission IP (Internet Protocol) ou ATM (Asynchronous Transfer Mode).

Dans ce contexte, l'introduction d'une grande variété de services, chacun de ces services étant associé à un ensemble SLS, complique encore davantage la gestion de ces réseaux, la configuration de ces services se faisant manuellement soit directement sur les éléments de réseau soit indirectement via un gestionnaire de réseau. Cette configuration manuelle pose un certain nombre de difficultés.

En effet, l'hétérogénéité et la complexité des réseaux imposent des équipes d'intervention possédant de grandes compétences techniques pour pouvoir configurer manuellement chaque type de réseaux ayant des technologies différentes.

En outre, la multiplication des offres de services implique que ces équipes aient un effectif très important.

De plus, le déploiement manuel des services est extrêmement long.

Le document EP1091528 décrit une solution à ces problèmes en divulguant une méthode et un dispositif pour fournir une qualité de service indépendamment des couches logicielles basses que sont les couches de transport, de réseau et de liaison. Pour cela, il utilise une entité de mise en concordance qui permet de traduire la qualité de service requise au niveau applicatif pour la rendre intelligible au niveau des couches basses. Cette entité se situe à un niveau d'abstraction intermédiaire entre les couches applicatives et les couches de transport, de réseau et de liaison. Le dispositif divulgué dans ce document permet une spécification de la qualité de service indépendante de la technologie du réseau.

Cependant, dans la mesure où les opérateurs offrent de nouveaux services avec une très grande valeur ajoutée, ils ont également besoin de contrôler la qualité de service offerte, de réagir lorsque se produit une violation d'un ensemble SLS associé à une qualité de service et de facturer le client en conséquence.

La présente invention vise à fournir un système de gestion de service sur au moins un réseau permettant de s'affranchir des problèmes posés par la configuration manuelle des services, de mettre en place un service tout en contrôlant la qualité de service offerte.

La présente invention propose à cet effet un système de gestion de service sur au moins un réseau, ledit système comprenant une couche de haut niveau d'abstraction indépendante dudit réseau, une couche de bas niveau d'abstraction dépendante de la technologie dudit réseau et une couche de niveau d'abstraction intermédiaire dépendante de la technologie dudit réseau **caractérisé en ce que**
- ladite couche de haut niveau comprend :
   o des moyens pour déterminer des ressources logiques à partir de paramètres logiques représentatifs d'un service et de la qualité requise dudit service.
   o des moyens pour déterminer des requêtes logiques de mise en place dudit service à partir de l'instanciation desdits paramètres logiques
   o des moyens pour contrôler la qualité dudit service
- ladite couche de bas niveau comprend :
   o des moyens pour configurer ledit réseau pour mettre en place ledit service,
   o des moyens pour collecter des données représentatives de ladite qualité requise,
- ladite couche de niveau intermédiaire comprend :
   o des moyens pour déterminer les ressources physiques du réseau nécessaires à la mise en place dudit service
   o des moyens pour déterminer le type de mesures pertinentes pour contrôler la qualité de service requise
   o des moyens pour traduire lesdites requêtes logiques de mise en place de service provenant de ladite couche de haut niveau en requêtes physiques destinées à la couche de bas niveau.
   o des moyens pour traduire les informations liées aux dites données collectées en informations compréhensibles par ladite couche de haut niveau.

Grâce à l'invention, la mise en place d'un service se fait automatiquement et indépendamment du réseau sur lequel il va être installé par le biais des paramètres techniques définissant ce service. Ces paramètres, après instanciation, vont être déployés à partir d'une couche de haut niveau d'abstraction indépendante du réseau vers une couche physique de bas niveau via une couche de niveau intermédiaire qui va permettre de traduire les informations descendant de la couche haute vers la couche basse et les informations montant de la couche basse vers la couche haute.

En outre, la mise en place du service s'accompagne de la mise en place du contrôle de la qualité de service qui lui est associé.

Enfin, les données collectées sont analysées après être remontées dans la couche de haut niveau.

Avantageusement, la couche de bas niveau comporte des moyens pour distribuer des points de mesure sur les éléments dudit réseau.

Selon un mode de réalisation, la couche de bas niveau comporte des moyens de comparaison des données collectées avec des valeurs seuils.

De manière avantageuse, la couche de haut niveau comporte des moyens pour prévoir l'évolution du comportement des performances du service.

Avantageusement, la couche de haut niveau comporte des moyens pour détecter une violation de la qualité de service.

De manière avantageuse, la couche de haut niveau comporte des moyens pour proposer des solutions en cas violation de la qualité de service.

D'autres caractéristiques et avantages de la présente invention apparaîtront dans la description suivante d'un mode de réalisation de l'invention, donné à titre illustratif et nullement limitatif.

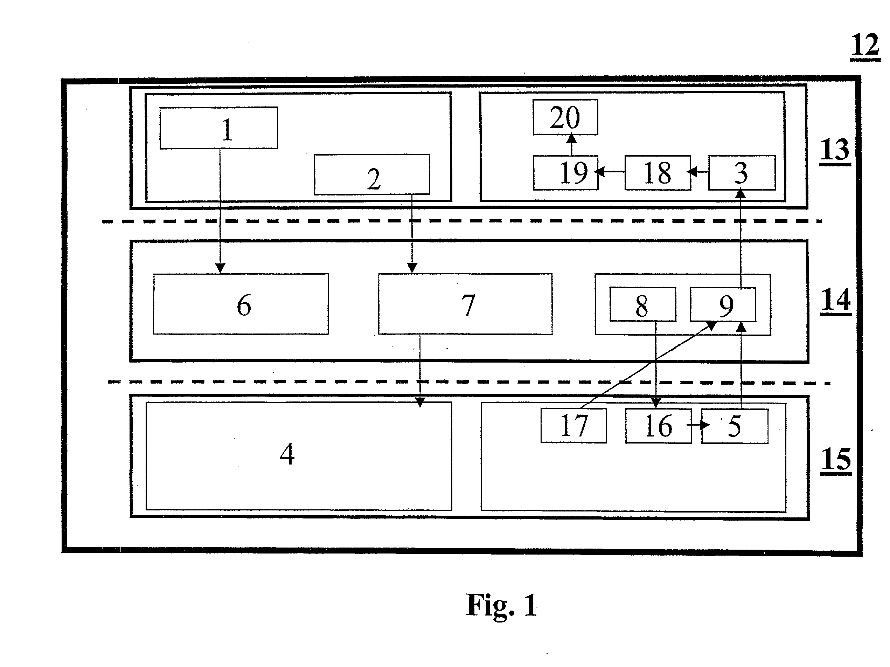

La figure 1 représente schématiquement le système de gestion de service selon l'invention.

Ainsi, la figure 1 représente un système 12 selon l'invention. Le système 12 comporte trois couches logicielles : une couche 13 de haut niveau d'abstraction, une couche 15 de bas niveau d'abstraction et une couche 14 de niveau d'abstraction intermédiaire entre les couches 13 et 15.

La couche 13 comprend des moyens 1 pour déterminer des ressources logiques à partir de paramètres logiques, des moyens 2 pour déterminer des requêtes logiques de mise en place d'un service et des moyens 3 pour contrôler la qualité dudit service.

La couche 15 comprend des moyens 4 pour configurer un réseau pour mettre en place le service, des moyens 5 pour collecter des données représentatives de la qualité requise et des moyens 16 pour distribuer des points de mesure sur les éléments du réseau.

La couche 14 comprend des moyens 6 pour déterminer les ressources du réseau nécessaires à la mise en place du service, des moyens 7 pour traduire les requêtes logiques de mise en place de service provenant de la couche 13 de haut niveau en requêtes physiques destinées à la couche 15 de bas niveau, des moyens 8 pour déterminer le type de mesures pertinentes pour contrôler la qualité de service requise, des moyens 9 pour traduire les informations liées à des données collectées en informations compréhensibles par la couche 13 de haut niveau.

Lorsqu'un utilisateur négocie un contrat avec un fournisseur de service, ce contrat va permettre de définir des paramètres techniques contenus dans une spécification de type SLS.

La première étape de la négociation consiste pour le fournisseur de service à vérifier la faisabilité de la mise en place du service à partir des paramètres techniques définis avec l'utilisateur.

Les moyens 1 vont déterminer, à partir des paramètres techniques, des ressources logiques qui vont être transmises aux moyens 6. Les moyens 6 vont interpréter ces ressources logiques en fonction du réseau physique et vérifier la disponibilité des ressources physiques au niveau du réseau.

Si les ressources sont disponibles, le système 12 va procéder à un double déploiement : le déploiement du service et le déploiement des éléments nécessaires au contrôle de la qualité associé au service.

Ainsi, les moyens 2 vont déterminer des requêtes logiques relatives au déploiement du service. Ces requêtes logiques, donc indépendantes de la technologie du réseau, sont envoyées aux moyens 7 qui vont traduire les requêtes logiques en requêtes physiques, donc dépendantes de la technologie du réseau. Ces requêtes physiques sont ensuite fournies aux moyens 4 qui vont configurer le réseau pour mettre en place le service, notamment en allouant la bande passante nécessaire à la mise en place du service.

En parallèle à la mise en place du service, les moyens 8 vont déterminer le type de mesures pertinentes pour contrôler la qualité du service. Ces mesures sont ensuite mises en place au niveau des moyens 16 qui vont permettre de distribuer les points de mesure sur les éléments du réseau. La collecte de données représentatives de la qualité de service souhaité est alors effectuée par les moyens 5.

Le service peut alors être utilisé par l'utilisateur. Les données collectées sont ensuite transmises aux moyens 9 qui vont traduire les données collectées en données interprétables au niveau de la couche 13. Ces données interprétables sont envoyées aux moyens 3. Les moyens 3 vont traiter ces données pour permettre au fournisseur de service de réagir en cas de violation de l'ensemble SLS, c'est à dire essentiellement de revoir la facturation du client en conséquence ou de renégocier un nouvel ensemble SLS.

La couche 15 comporte également des moyens 17 de comparaison des données collectées avec des valeurs seuils. Ces moyens 17 permettent de déclencher une alarme lorsqu'une valeur seuil est dépassée.

La couche 13 comporte également des moyens 18 pour prévoir l'évolution du comportement des performances du service, des moyens 19 pour détecter une violation de la qualité de service et des moyens 20 pour proposer des solutions en cas violation de la qualité de service.

Les moyens 18 permettent de prévoir ou d'évaluer l'évolution du comportement des performances du service en analysant les données reçues par les moyens 3.

Les moyens 19 détectent une violation de la qualité de service associée à l'ensemble SLS en fonction des données reçues par les moyens 3 ou par les moyens 18.

Les moyens 20 reçoivent une information de violation de la qualité de service provenant des moyens 19. Les moyens 20 proposent alors une solution qui peut consister à revoir la facturation de l'utilisateur ou à définir de nouveaux paramètres de service.

## Revendications

1. Système (12) de gestion de service sur au moins un réseau, ledit système (12) comprenant une couche (13) de haut niveau d'abstraction indépendante dudit réseau, une couche (15) de bas niveau d'abstraction dépendante de la technologie dudit réseau et une couche (14) de niveau d'abstraction intermédiaire dépendante de la technologie dudit réseau **caractérisé en ce que**
- ladite couche (13) de haut niveau comprend :
o des moyens (1) pour déterminer des ressources logiques à partir de paramètres logiques représentatifs d'un service et de la qualité requise dudit service.
o des moyens (2) pour déterminer des requêtes logiques de mise en place dudit service à partir de l'instanciation desdits paramètres logiques
o des moyens (3) pour contrôler la qualité dudit service
- ladite couche (15) de bas niveau comprend :
o des moyens (4) pour configurer ledit réseau pour mettre en place ledit service,
o des moyens (5) pour collecter des données représentatives de ladite qualité requise,
- ladite couche (14) de niveau intermédiaire comprend :
o des moyens (6) pour déterminer les ressources physiques du réseau nécessaires à la mise en place dudit service
o des moyens (8) pour déterminer le type de mesures pertinentes pour contrôler la qualité de service requise
o des moyens (7) pour traduire lesdites requêtes logiques de mise en place de service provenant de ladite couche (13) de haut niveau en requêtes physiques destinées à la couche (15) de bas niveau.
o des moyens (9) pour traduire les informations liées aux dites données collectées en informations compréhensibles par ladite couche (15) de haut niveau.

2. Système (12) selon la revendication 1 **caractérisé en ce que** ladite couche (15) de bas niveau comporte des moyens (16) pour distribuer des points de mesure sur les éléments dudit réseau.

3. Système (12) selon l'une des revendications précédentes **caractérisé en ce que** ladite couche (15) de bas niveau comporte des moyens (17) de comparaison des données collectées avec des valeurs seuils.

4. Système (12) selon l'une des revendications précédentes **caractérisé en ce que** ladite couche (13) de haut niveau comporte des moyens (18) pour prévoir l'évolution du comportement des performances du service.

5. Système (12) selon l'une des revendications précédentes **caractérisé en ce que** ladite couche (13) de haut niveau comporte des moyens (19) pour détecter une violation de la qualité de service.

6. Système (12) selon l'une des revendications précédentes **caractérisé en ce que** ladite couche (13) de haut niveau comporte des moyens (20) pour proposer des solutions en cas violation de la qualité de service.
